**Europäisches Patentamt**

**European Patent Office**

**Office européen des brevets**

(19)

(11) **EP 1 174 294 A2**

(12) # EUROPEAN PATENT APPLICATION

(43) Date of publication:
**23.01.2002  Bulletin 2002/04**

(51) Int Cl.⁷: $B60G\ 21/05$, $B60G\ 9/02$

(21) Application number: **01830447.7**

(22) Date of filing: **03.07.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.07.2000  IT  TO000719**

(71) Applicant: **Sista Evoluzione Srl**
**10125 Torino (IT)**

(72) Inventor: **Morelli, Alberto**
**10131 Torino (IT)**

(74) Representative: **Notaro, Giancarlo et al**
**c/o Buzzi, Notaro & Antonielli d'Oulx srl, Corso Fiume 6**
**10133 Torino (IT)**

(54) **Vehicle suspension axle with differentiated deformability**

(57)    A suspension axle for vehicles consists of a differentiated-deformability beam (11), preferably with an arched profile, designed to support, by means of hubs of a usual kind, the wheels ($R_1,R_2$) at its ends and carrying, in a substantially central position, an anchoring means consisting of an appropriate ball-and-socket joint (15) for anchorage to the body of the vehicle. Anchorage of the axle to the body is completed by two connecting rods (23a,23b), preferably in the form of substantially longitudinal strips connected to the body and to the axle. The transverse part of the beam has an overall torsional rigidity such as to enable a differential rebound of the wheels in order to ensure a behaviour of the suspension intermediate between that of a beam-axle suspension and that of a trailing-arm suspension.

Fig. 5

## Description

The present invention relates to suspension axles for vehicles.

The need to provide motor vehicles with suspensions derives, as is well known, from the presence of road pavement irregularities. Suspensions may be divided, at least from the functional standpoint, into two parts. A first part is the one on which the law of relative motion between the body and the wheel support (hub or pin) depends, and may be defined briefly as the "kinematics" of the suspension. A second part is the one on which the laws of forces-displacements of the wheel-body depend, and may be defined as the "dynamics" of the suspension.

In general, the "kinematics" and "dynamics" are materially distinct, the kinematics being ensured by linkage elements, such as connecting rods, levers, arms, etc. (i.e., elements that are practically undeformable but articulated together by means of articulation joints, slides, etc.), whilst the dynamics is ensured by elements that react to high deformations and/or rates of deformation, such as springs and shock absorbers. These two parts are both required to perform the main function of the suspension, namely, that of filtering the bumps in the road in order to ensure the travelling comfort and the structural strength of the vehicle. In addition, however, they must also ensure that the travelling behaviour (basically, what is referred to as "road holding" and directional stability) is as good as possible, as far as this is compatible with the characteristics of the wheel-road interaction. Amongst the qualities required of suspensions there are those of reduced overall dimensions, low cost, reliability, simplicity of maintenance, ease of repair, etc.

All the above requirements are frequently in contrast with one another, and consequently many types of suspensions have been devised which are capable of favouring certain important requirements in a specific application, albeit at the expense of others. For this reason, the "dependent-wheel" solutions, such as the one known as the "beam-axle" suspension system have been abandoned in the front (steering) axle of automobiles in favour of "independent-wheel" suspension systems. The latter in general have smaller overall dimensions in the central part of the axle, but are more complicated than the former type, particularly as regards the kinematics, on account of the presence of various elements and corresponding articulations. Furthermore, they present the defect of causing the camber angle to vary with rolling. As a result, the wear of the tyres becomes irregular, especially when the vehicles are used on curvilinear routes, and moreover they worsen the characteristics of the wheel-road interaction and the corresponding qualities of maximum adherence. It is also for this reason that frequently in the rear axles of front-wheel-drive motor vehicles, the rigid-axle solution is maintained, even though this solution involves a considerable encumbrance in terms of overall dimensions also in the centre line of the track, not only on account of the dimensions of the beam that connects the wheels together, but also on account of the considerable rebound of the beam itself. Owing mainly to this drawback, trailing-arm suspensions (in French referred to as "roue tirée") are frequently preferred, which offer an optimal solution in terms of overall dimensions, but which, in addition to the drawback referred to above in connection with independent-wheel suspensions, also present the added problem of a rolling axis set very low down (considerably lower than ground level), so accentuating the problem of the camber angle due to rolling. For these reasons, in the past an intermediate solution between the ones referred to above has enjoyed a considerable success. This is a suspension in which the longitudinal arms are connected together by a beam set in the distance between the centres of the wheels and of the articulation hinge of the arms of the body. The beam is torsionally compliant, whilst being flexurally quite rigid. Consequently, the suspension presents a behaviour which resembles more closely that of a rigid-axle suspension, the closer the beam is to the wheel axis, whereas the suspension presents a behaviour which resembles more closely that of a trailing-arm suspension, the closer the beam is to the hinge between the arms and the body. In the case where the beam were to coincide with the latter axis, a longitudinal-arm suspension with anti-roll bar would be obtained. A mean or compromise is thus reached between the advantages and disadvantages of the two extreme solutions.

One of the main purposes of the present invention is to provide a suspension that is intermediate between the beam-axle suspension and the trailing-arm suspension, eliminating, however, some of the drawbacks that are typical of these solutions.

Another purpose of the present invention is to provide a suspension which is of reduced encumbrance in height and which moreover presents the following features: a characteristic of considerably variable flexibility of the elastic reaction to the load; a longitudinal flexibility of the wheel constraint capable of filtering the medium-frequency actions of the longitudinal forces that are produced at the level of wheel-ground contact in overcoming obstacles of some centimetres in size (tram lines, holes, ruts, stones, etc.), which cause highly unpleasant longitudinal jolts in practically all current suspensions; and a slight flexibility with a rapidly decreasing characteristic also in the transverse direction.

The above and further purposes are achieved by the present invention by means of an axle for vehicle suspensions having the characteristics specified in the annexed Claim 1. The subsequent dependent claims specify further advantageous characteristics which are preferably adopted in an axle according to the invention.

Further characteristics and advantages of the present invention will emerge from the ensuing detailed description, with reference to the attached drawings, provided purely by way of non-limiting example, in which:

- Figure **1** is a schematic plan view of a first embodiment of the axle according to the present invention;
- Figures **2** and **3** are, respectively, a side elevation and a front elevation of the axle of Figure 1;
- Figures **4**, **5** and **6** are, respectively, a front elevation, a plan view, and a side elevation of a further embodiment of the axle according to the invention;
- Figures **7**-**9** are idealizations and diagrams illustrating the working principle of the axle according to the invention;
- Figures **10** and **11** illustrate two possible constructional embodiments of an item of the axle of Figures 4-6;
- Figure **12** is an idealization of the axle of Figures 4-6; and
- Figures **13** and **14** illustrate two further embodiments of the axle according to the present invention.

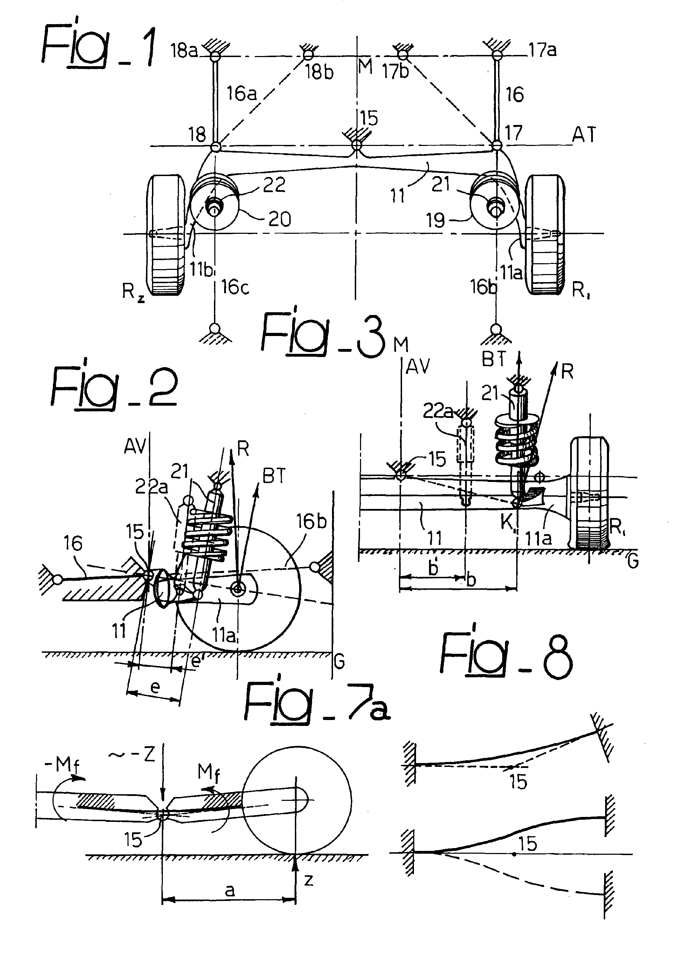

With reference to Figures 1-3, the axle according to the invention consists of a beam 11 with arched ends 11-11b, which support, with interposition of rotational coupling means, a pair of wheels of the vehicle, respectively designated by $R_1$ and $R_2$. The wheels may be driving wheels, or just load-bearing wheels either fixed or steering ones. The example illustrated refers to a suspension for non-steering load-bearing wheels. The invention is, in fact, devised particularly for use on the rear axle of front-wheel-drive motor vehicles. According to the invention, the beam carries, in a roughly central position, an anchoring means for anchorage to the body F of the vehicle. This means consists of a ball-and-socket joint 15 which constrains the axle to motions of rotation about its centre, as well as to motions, generally of smaller degree, corresponding to the deformations of the beam.

According to the invention, the degree of freedom corresponding to the rotational motion of the axle about the axis AV, which is substantially perpendicular to the ground and passes through the centre of the ball-and-socket joint, is prevented by at least one connecting rod, such as 16, but preferably by two connecting rods 16, 16a, as illustrated in Figures 1 and 2. Each connecting rod is articulated, with the interposition of ball-and-socket joints, on one side to the beam 11 in the points 17, 18 lying on a transverse axis AF that passes through the centre of the ball-and-socket joint 15, and, on the opposite side, by means of further ball-and-socket joints, in the points 17a, 18a, to the body of the vehicle. These points may also be displaced in 17b, 18b to enable a solution which is kinematically the more correct, the closer the said points are to the plane of the centre line MM of the axle. In the case where they were to coincide and to lie in the plane of symmetry, the position of the connecting rods with respect to the ground would be invariable for any motion of suspension. However, for reasons of overall dimensions, they will preferably be set at quite a distance therefrom without this leading to serious geometrical errors on account of the small amount of the relative displacements between the body and the connecting rods, it being moreover possible for said displacements to occur only during rolling. The inclination of the connecting rods with respect to the ground, which may be fixed beforehand, is thus substantially constant.

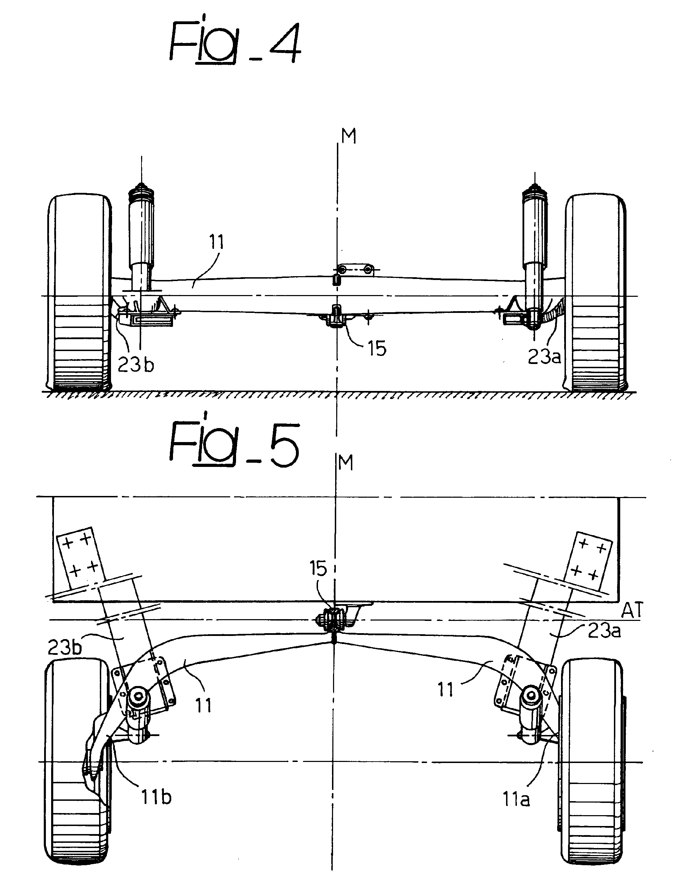

The beam of the axle is moreover subject to the action of elastic means of suspension consisting, for example, of helical springs 19, 20, as well as to the action of damping means constituted by shock absorbers 21, 22. The elastic suspension means and the damping means may be arranged with straight lines of application of the coinciding forces, as is indicated by a solid line in Figures 1, 2 and 3, or else according to distinct straight lines of application, the position of a shock absorber 22 being illustrated by a dashed line in Figures 2 and 3, the said shock absorber 22 being set according to an axis distinct from the straight line of application of the force of the elastic means of suspension. Both the elastic means 19, 20 and the damping means 21, 22 are in any case constrained to the beam of the axle in points of the latter, such as $k_1$, $k_2$, which define lever arms with respect to the centre of the ball-and-socket joint 15.

In Figures 2 and 3, $\underline{b}$ designates the lever arm that the damping means have in the motion of rolling of the body, and $\underline{e}$ designates the lever arm that the damping means have in the motion of pitching or translation of the body. These lever arms may be varied within wide limits and in the ratio of one to the other, thus making it possible to obtain a damping action adapted to the values of the stiffnesses adopted in regard to the translational and pitching motions of suspension (arm $\underline{e}$) and rolling motions (arm $\underline{b}$) of the body with respect to the axle.

In Figures 1, 2 and 3, the arrow BT indicates the direction of rebound corresponding to pitching and to translational motion of the body; the arrow R corresponds to rolling. BT and R are, respectively, perpendicular to the centre-ball joint 15 direction and to the connecting rods 16, 16a. By varying the inclination of the connecting rods 16, 16a (which may also be inverted as 16b and 16c of Figures 1 and 2, if this is convenient for reasons of encumbrance) with respect to the ground, it is thus possible, regardless of the direction BT, to vary the direction of rolling rebound. If the direction R is chosen as being normal to the ground G, also the steering of the axle resulting from the rolling motion will be zero. This steering may, therefore, according to the invention, be chosen and pre-set by varying the inclination of the axis of the connecting rods 16, 16a with respect to the ground. Also the direction of rebound BT may be chosen on the basis of other conditions, irrespective of the direction R.

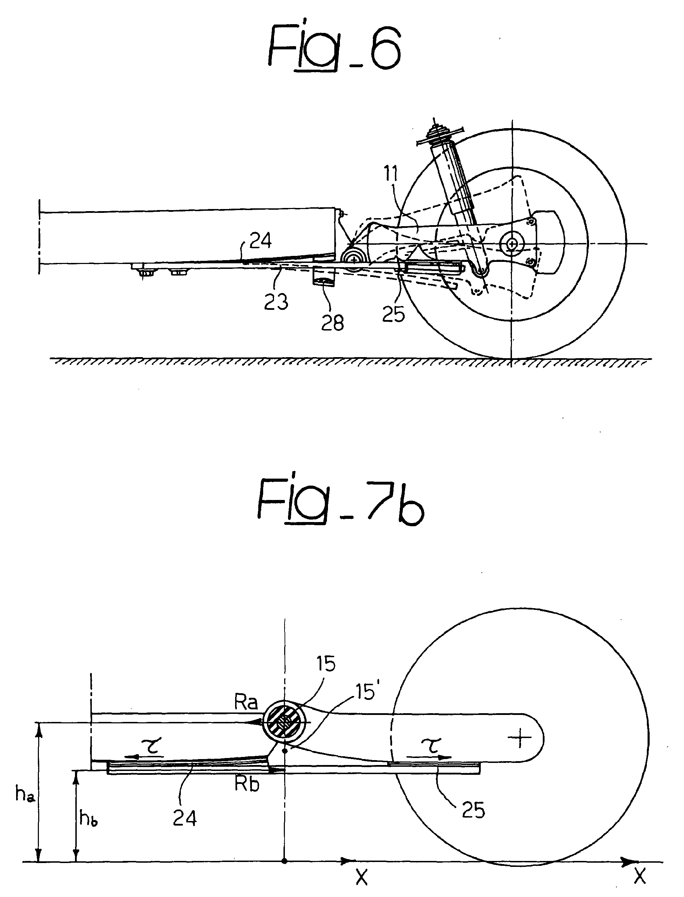

In order to render the suspension simpler and less costly, as well as to reduce the overall dimensions, a preferred embodiment is illustrated in Figures 4, 5 and 6, where a number of variants to the solution described above are illustrated, as explained in what follows.

The connecting rods 16 and 16a are replaced by elements 23a, 23b which are deformable according to a flexural-loading plane, the said elements 23a, 23b being connected, at one end, to the body and at the other hand to the beam of the axle, preferably in a position close to the wheels. The said elements are preferably shaped like the leaves of leaf springs, with the main dimension set in the longitudinal or quasi-longitudinal direction, and the smaller dimension set in the vertical or quasi-vertical direction, approximately at the height of the transverse axis AT through the ball-and-socket joint 15. The above elements will be subjected substantially to pure bending loads with a bending moment $M_f = Z \times a$, since the reaction to the load Z acting on the wheels will be mainly exerted by the ball-and-socket joint 15 according to the scheme of Figure 7. In this way, the elements with constant cross section would be deformed according to the arc of a circle, their tangents at the ends defining the centre of relative rotation of the fixed ends. Since the fixed ends in the present case are the beam and the body, this point must be located on the axis AT through the ball-and-socket joint 15 (Figure 8).

A different and important configuration envisages, instead, an arrangement of the ball-and-socket joint eccentric to the leaf of the leaf spring (Figure 7b). In this way, forces in the longitudinal direction such as those denoted by X (braking forces or forces due to obstacles) will give rise to the reactions Ra and Rb on the ball-and-socket joint 15 and on the rubber elements, such as 24 and 25, which will be called upon to work substantially in shear with shearing loads τ to which, as is well known, the rubber reacts with large deformations and damping effects. Of course, since also the ball-and-socket joint is preferably made of elastomer, it will be deformed, so contributing to providing damping effects. As a result of the deformations, the actual axis of oscillation of the axis will shift into positions, such as 15' (Figure 7b).

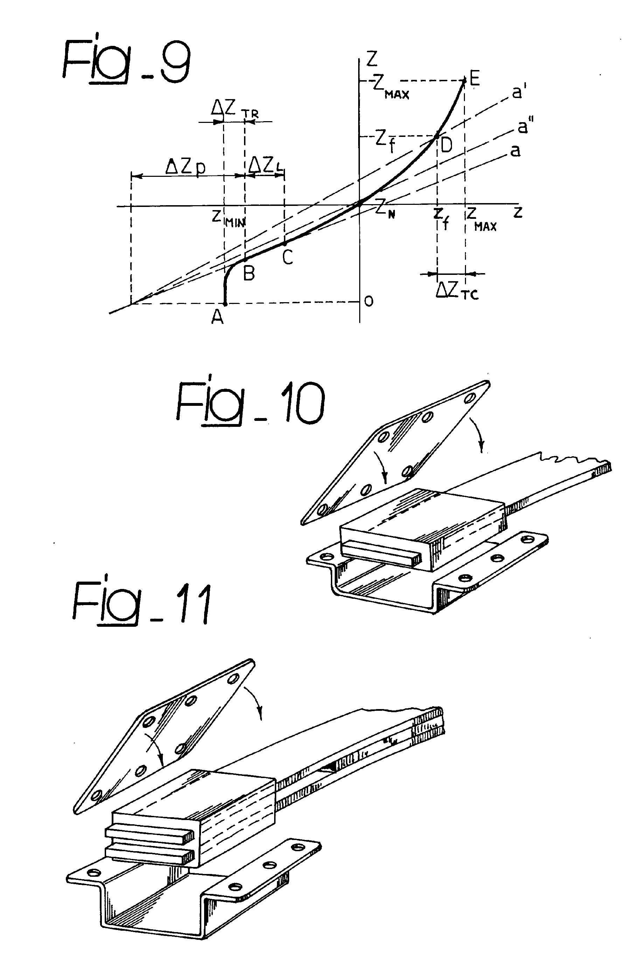

In practice, according to the invention, a number of variations with respect to the solution described above will be preferred, as described in what follows. As well as performing the function of the connecting rods 16, 16a of the previous solution, the deformable elements will be used as true springs of the suspension. They will preferably have a constant cross section. They will be constrained to the body preferably underneath the side members (or, using the French term, 'brancards') to facilitate assembly and disassembly. They will be fixed to the beam with the interposition of elastic-damping material, such as rubber, thus providing an imperfect fixed end, as will be explained hereinafter. These elements will work substantially in pure bending as long as their length of deflection is not reduced on account of the progressive coincidence of the leaf spring with the bottom surface of the body structure to which the leaf spring is constrained. This surface will preferably be made of blocks of soft material (rubber) 24 to ensure a very gradual variation (and without impact on the spring) of the flexibility of the spring. The diagram of Figure 9 represents the load (Z)-rebound (z) characteristic of the suspension as referred to the centre of the wheel. $Z_N$ is the nominal load or the static working load. As a result of the customary presence of rubber rebound bumpers, the spring is pre-deformed by $\Delta z_p$ when its load Z goes to zero (point A). As Z increases, first the reaction of the rebound bumper vanishes in B with increase $\Delta z_{TR}$ of the rebound; then the spring reacts by itself to the increments in load, remaining at a constant length of deflection for the increment in rebound $\Delta z_L$; i.e., up to the point C, $\Delta z_L$ may be more or less small. From C onwards, the length of deflection of the spring is reduced owing to the coincidence, as already mentioned, of the leaf with the blocks such as 24. The system affords the advantage of enabling variation in the flexibility of the suspension by a practically limitless amount and in a pre-set way. For example, it is possible to achieve the known single-frequency characteristic of the suspension, maintaining the power -1/2 of the load x flexibility product. The variable-flexibility characteristic with the aforesaid system can be extended up to the rebound $Z_{max}$ (point E), or else be limited to smaller rebounds ($Z_f$, point D), thus leaving, as is customary, the job of covering the portion of characteristic from D to E to the compression rebound bumpers. In order to obtain the desired load-displacement law, maintaining the loads on the spring within acceptable limits, it may be necessary or useful to resort to a pack of leaves set on top of one another, as is normally the case in leaf springs. In this case, according to the invention, the springs will preferably be made up of equal leaves set on top of one another at slight distances apart. In this way, since the elastic lines of the leaves are identical, the facing surfaces will not rub against one another. The possibility of a relative contact between the leaves is, however, possible in the portion that corresponds to the coincidence between the highest leaf and the blocks 24. For this portion, it will be preferable to interpose, between the leaves, spacing strips made of deformable material, as is normally the case in common leaf springs (26 of Figure 11).

The aforementioned beam 11, which is arched at the ends 11a and 11b, will preferably be obtained from a tube of circular cross section, which maintains the circular section practically only at the elbows. Starting from the said elbows, both towards the wheel pins and towards the ball-and-socket joint 15, the tube is progressively flattened in such a way as to assume elliptical or oval cross sections with the major axis substantially in the direction normal to the median plane(MP)of the beam (i.e., the plane passing through the centres of figure of the beam itself). In this way, the torsional rigidity of the beam 11 will be reduced where the latter is more flattened, thus rendering possible for the wheels differential rebounds as in independent-wheel suspensions with anti-rolling bar, the function of the bar being performed by the beam itself, which is subjected to torsional deformation. The torsional rigidity of the bar will be the smaller, the greater is the flattening, and the greater is the extension of the flattening adopted in making the beam. According to the invention, the flattening of the beam in the vicinity of the central articulation will preferably be very high, rendering it bendable under the action of bending loads in the median plane as if, in the vicinity of the ball-and-socket joint 15, the beam itself had a hinge with axis perpendicular to the median plane.

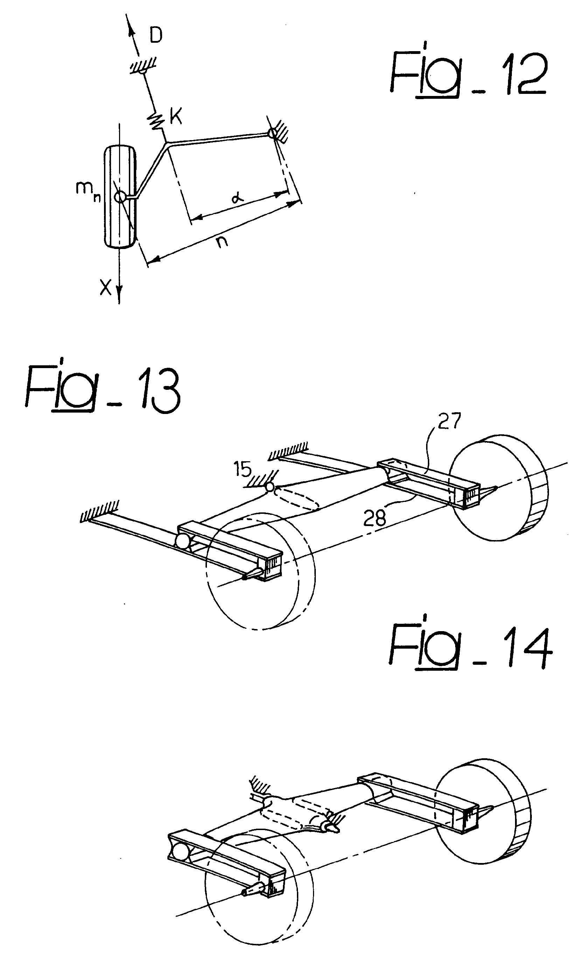

Since the median plane is approximately parallel to the ground, the longitudinal forces X applied to the wheel pin will load the axle according to the scheme of Figure 12. The vibrational frequency of the system thus represented in the idealization will be

$$f_0 = (1/2\pi) \times (d/n) \times \sqrt{K/m_n}$$

and hence

$$K = m_n\, f_o^2\, 4\pi^2\, n^2/d^2$$

In the axle according to the invention, $n^2/d^2 \cong 2$. Consequently, the stiffness K of the longitudinal constraint of the spring to the beam is approximately twice the stiffness that there would be if the entire beam were to oscillate longitudinally. This constitutes an important advantage because, if values of $f_0$ in the region of 10 Hz are to be chosen, with a mass $m_n = 35$ kg, the stiffness value is $K = 300$ Nm$^{-1}$, which may be easily obtained with a rubber grip working in shear, of the type represented in Figures 10 and 11. The vibrational characteristic that has just 'been described is aimed at obtaining a good filtering of the excitations due to the longitudinal forces that are set up when the tyre encounters obstacles having dimensions of the order of centimetres (tram lines, stones, etc.).

The other characteristic of the curved beam of being able to undergo torsional deformation is aimed at obtaining from the suspension a behaviour that is intermediate between that of a rigid axle and that of a longitudinal-arm axle. The greater the torsional rigidity of the beam, the closer the behaviour of the axle to the behaviour of a rigid axle, and consequently the closer the rolling axis to the ball-and-socket joint 15. The said axis would pass exactly through 15 if the beam were perfectly rigid and if the tyres were undeformable. The rolling axis is thus lowered progressively as the behaviour approaches that of a longitudinal-arm suspension, which may be obtained both by acting on the torsional deformability of the transverse part of the beam and on the flexural deformability of the longitudinal arms of the beam itself. To obtain the latter deformability, the beam may be shaped as illustrated in Figure 13, where the longitudinal arms are each shaped like a pair of leaves 27, 28 of a leaf spring set on top of one another at a sufficient distance apart to obtain the desired resistance to the braking moments and fixed-end moments of the pins or hubs of the wheels. The solution illustrated in Figure 13 envisages that one of the leaves 28 is made integrally with the leaf that functions as element of constraint of the beam to the body, as already described.

The conformation of the transverse wall of the beam may differ from the one previously described, so as to be flattened at the centre, above and below, instead of longitudinally. In this way, the beam is rigid in its median plane (MP), and flexible in the loading plane transverse to the vehicle, thus leading to a behaviour which is in part similar to that of swing-arm suspensions and is of particular interest in curving motion of the vehicle because it induces a variation in the camber angle opposite to that of the trailing-arm suspension. However, this conformation of the beam nullifies the effect of the system of constraint of the deformable elements to the beam itself. In this case, the characteristics of the constraint, on account of the filtering of the medium-frequency modulations of the longitudinal forces, is transferred with a similar form to the constraint of the deformable elements to the body. An alternative to the aforesaid system is illustrated in Figure 14, where the ball-and-socket joint 15 is replaced by a longitudinal hinge. In this case, rotation of the beam with respect to the transverse axes is practically prevented, and hence the part of the behaviour corresponding to the rigid axis vanishes. Instead of assuming a behaviour intermediate between those of a beam-axle suspension, a trailing-arm suspension, and a swing-arm suspension, the suspension according to the invention assumes a behaviour intermediate between that of a trailing-arm suspension and that of a swing-arm suspension.

Of course, without prejudice to the principle of the invention, the details of construction and the embodiments may vary widely with respect to what is described and illustrated herein purely by way of example, without thereby departing from the scope of the present invention.

**Claims**

1. A suspension axle for vehicles, **characterized in that** it consists of a differentiated-deformability beam (11) with an arched profile, designed to support, by means of a usual kind, the wheels ($R_1$, $R_2$) at its ends and carrying, in a substantially central position, an anchoring means consisting of a ball-and-socket joint (15) for anchorage to the body of the vehicle, anchorage of the axle to the body being completed by two substantially longitudinal connecting rods (16, 16a; 23a, 23b).

**2.** The axle according to Claim 1, in which the function of the longitudinal connecting rods is performed by elements deformable according to planes of longitudinal-vertical flexural loading, said elements being connected at one end to the vehicle body and at the other end to the beam of. the axle, preferably in a position close to the wheels.

**3.** The axle according to Claim 1 or Claim 2, **characterized in that** the inclination of the axis of the connecting rods, or of the deformable elements referred to in Claim 2, with respect to the ground is pre-set in order to obtain the desired gradient of steering by rolling; the direction of rebound for motions of translation and pitching of the body being defined by the normal to the plane passing through the centres of the wheels and passing substantially through the centre of the ball-and-socket joint, it being possible to distinguish said direction from the direction of rolling rebound.

**4.** The axle according to Claim 2, in which the deformable elements also perform,the role of reaction springs for reacting to the load of the suspension.

**5.** The axle according to Claim 3 or Claim 4, in which the deformable elements are also reaction elements for reacting to the longitudinal thrusts applied to the wheels.

**6.** The axle according to Claim 3, Claim 4, or Claim 5, in which the deformable elements are also reaction elements for reacting to the transverse thrusts applied to the wheels.

**7.** The axle according to Claim 2, in which the constraint of the deformable elements to the body is obtained in such a way as to ensure an appropriate variation in flexibility of the suspension to the rebounds.

**8.** The axle according to Claim 2, in which the constraint of the deformable elements to the beam is obtained in such a way as to ensure an appropriate deformability in regard to the wheel-ground longitudinal loads.

**9.** The axle according to Claim 1, in which the elastic and damping means of the suspension are each constrained to the beam in points that define lever arms with respect to the axes passing through the centre of the ball-and-socket joint that provides. constraint to the body, and corresponding to the rolling motion and to the translational and pitching motions, and in which the extension of said lever arms is chosen according to the stiffness and damping desired for said rolling, translational and pitching motions.

**10.** The axle according to Claim 1, in which the wheel-connecting beam is considerably rigid in the flexural-loading plane that is substantially transverse and passing through the centres of the wheels, whereas it is somewhat flexible in the flexural-loading plane that is substantially longitudinal and parallel to the ground.

**11.** The axle according to Claim 1, in which the transverse part of the beam (11) has an overall torsional rigidity such as to enable differential rebound of the wheels, thus ensuring for the suspension a behaviour that is intermediate between that of a beam-axle suspension and that of an oscillating-arm suspension.

**12.** The axle according to Claim 1, in which the parts of the beam that have a substantially longitudinal development have a somewhat high deformability for flexural stresses in the vertical longitudinal planes passing through the centres of the wheels, in such a way as to ensure for the suspension a behaviour that is intermediate between that of a beam-axle suspension and that of a suspension with oscillating trailing-arms.

**13.** The axle according to Claim 1, in which the connecting beam is somewhat flexible also in the substantially transverse flexural-loading plane passing through the centres of the wheels, in such a way as to ensure for the suspension a behaviour that is intermediate between that of a beam-axle suspension, that of a longitudinal-arm suspension, or that of a swing-arm suspension.

**14.** The axle according to Claim 1, in which the ball-and-socket joint (15) for anchorage of the beam to the body is mounted with pre-loading in order to reduce the maximum loads to which it is subjected during operation.

Fig_1

Fig_2

Fig_3

Fig_7a

Fig_8

# Fig_4

# Fig_5

# Fig_6

# Fig_7b

Fig _ 9

Fig _ 10

Fig _ 11

Fig_12

Fig_13

Fig_14